# EUROPEAN PATENT SPECIFICATION

(11) **EP 0 485 629 B1**
(45) Date of publication and mention of the grant of the patent: **22.02.1995**
(21) Application number: 91910197.2
(22) Date of filing: 04.06.1991
(51) Int. Cl.: G01M 11/00

(54) **METHOD AND DEVICE FOR TESTING MULTI-CORE OPTICAL FIBER CABLE FITTED WITH OPTICAL CONNECTOR**
METHODE UND GERÄT ZUM TESTEN VON MEHRADRIGEN OPTISCHEN FIBERKABELN MIT OPTISCHEN ANSCHLÜSSEN
PROCEDE ET DISPOSITIF SERVANT A TESTER DES CABLES A FIBRES OPTIQUES MULTICONDUCTEURS EQUIPES DE RACCORDS OPTIQUES

(30) Priority: 04.06.1990 JP 144397/90
(43) Date of publication of application: 20.05.1992
(73) Proprietor: THE FURUKAWA ELECTRIC CO., LTD., Tokyo 100 (JP)
(72) Inventor: KINOSHITA, Isamu, The Furukawa Electric Co., Ltd., Ichihara-shi, Chiba 290 (JP); YUGUCHI, Ren-ichi, The Furukawa Electric Co., Ltd., Ichihara-shi, Chiba 290 (JP); SUZUKI, Kenji, The Furukawa Electric Co., Ltd., Ichihara-shi, Chiba 290 (JP)
(74) Representative: Schmidt-Evers, Jürgen, Dipl.-Ing.
(86) International application number: JP9100747
(87) International publication number: WO9119179

(56) References cited:
- JP-A-55 163 425

## Description

### TECHNICAL FIELD

The present invention relates to a method and an apparatus for inspecting the quality of a ribbon fiber cable having an optical connector.

### BACKGROUND ART

Optical fiber cables include single-core optical fiber cables having a single optical fiber and ribbon fiber cables having a number of optical fibers. In the case of both of these optical fiber cables, an optical connector is attached to the ends for connection to other optical fiber cables. In this case, it is necessary to examine the connection loss caused by the attachment of the optical connectors.

In particular, in a ribbon fiber cable, it is necessary to inspect the arrangement of the optical fibers after the attachment of the optical connectors in addition to the connection loss. This is because, while rare, the arrangement of the optical fibers sometimes ends up being changed by the attachment of the optical connectors.

When inspecting a ribbon fiber cable after attachment of an optical connector, in the prior art the inspection of the connection loss and the inspection of the arrangement have been performed as separate processes. The arrangement of the optical fibers was inspected by inputting a light beam from one end of the ribbon fiber cable for each optical fiber and examining by visual inspection or an image sensor the order of the light beam emitted from the other end of the optical fiber cable for each optical fiber. Further, the connection loss was inspected by inputting a light beam from one end of the ribbon fiber cable for each optical fiber and measuring by a light power meter the intensity of the light beam emitted from the other end of the optical fiber cable for each optical fiber.

Note that as the method for inputting a light beam for each optical fiber, there is known the method of applying modulation for each beam inputted to the optical fibers.

In the method of inspection used for a conventional inspection apparatus, since the inspection of the connection loss caused by attachment of the optical connector and the inspection of the arrangement of the optical fibers were performed as separate processes, there were the problems that the inspection work was difficult and a long time was required for the inspection.

### DISCLOSURE OF THE INVENTION

The present invention was made to eliminate the disadvantages of the prior art and has as its object the provision of a method and an apparatus for inspecting a ribbon fiber cable having an optical connector which enable simultaneous inspection of the connection loss and inspection of the arrangement, facilitate the inspection work, and reduce the inspection time.

To achieve the above-mentioned object, the method of inspection of the present invention is characterized by connecting to one end of an optical fiber cable a light inputting means for inputting a light beam in a predetermined order to each of the inputting side ends of the optical fibers, disposing at the other end of the optical fiber cable a light receiving means in a predetermined distance away from the emitting side ends of the optical fibers, disposing between the emitting side ends of the optical fibers and the light receiving means a light passing/blocking means for selectively allowing, for each light beam emitted from the emitting side ends, the passing or blocking of light emitted from the emitting side ends and inputted to the light receiving means, passing or blocking in a predetermined order by the above-mentioned light passing/blocking means the light beam inputted and emitted for each optical fiber in a predetermined order, and using the light receiving means to detect the presence of irradiation of light and the luminous quantity of the light beam so as to simultaneously perform inspection of the order of arrangement of the optical fibers and the inspection of the connection loss due to the connector.

Further, the inspection apparatus of the present invention is characterized by comprising a light inputting means which is connected to one end of an optical fiber cable and which inputs a light beam in a predetermined order to each of the inputting side ends of the optical fibers, a light receiving means disposed at the other end of the optical fiber cable in a predetermined distance away from the emitting side ends of the optical fibers, and a light passing/blocking means which is disposed between the emitting side ends of the optical fibers and the light receiving means and which selectively allows, for each light beam emitted from the emitting side ends, the passing or blocking of the light beam emitted from the emitting side ends and inputted to the light receiving means, wherein the light beam inputted and emitted for each optical fiber in a predetermined order is passed or blocked by the above-mentioned light passing/blocking means in a predetermined order and the light receiving means is used to detect the presence of irradiation of the light beam and the luminous quantity of the light beam so as to simultaneously perform inspection of the order of arrangement of the optical fibers and the inspection of the connection loss due to the connector.

When using the inspection apparatus of the present invention to inspect a ribbon fiber cable, the light inputting apparatus is connected to one end of the ribbon fiber cable and a light beam is inputted from there for each optical fiber in a predetermined order. The inputted light beam is emitted from the emitting ends of the optical fibers toward the light receiving means. On the other hand, the light passing/blocking means selectively passes or blocks the light beam inputted and emitted in a predetermined order for each optical fiber in a predetermined order corresponding to the optical fibers where the light is inputted to.

Therefore, by having the light beam emitted from the emitting side ends of the optical fibers in a predetermined order passed or blocked by the light passing/blocking means in the order corresponding to that order, it is detected whether the arrangement of the optical fibers is normal or not. Further, when the light beam emitted from the optical fibers is received by the light receiving means, the luminous quantity of light is simultaneously measured, so it is possible to measure the connection loss of the light beam due to the connection of an optical connector.

Therefore, it becomes possible to inspect a ribbon fiber cable having an optical connector efficiently and in a short time.

### BRIEF DESCRIPTION OF THE DRAWINGS

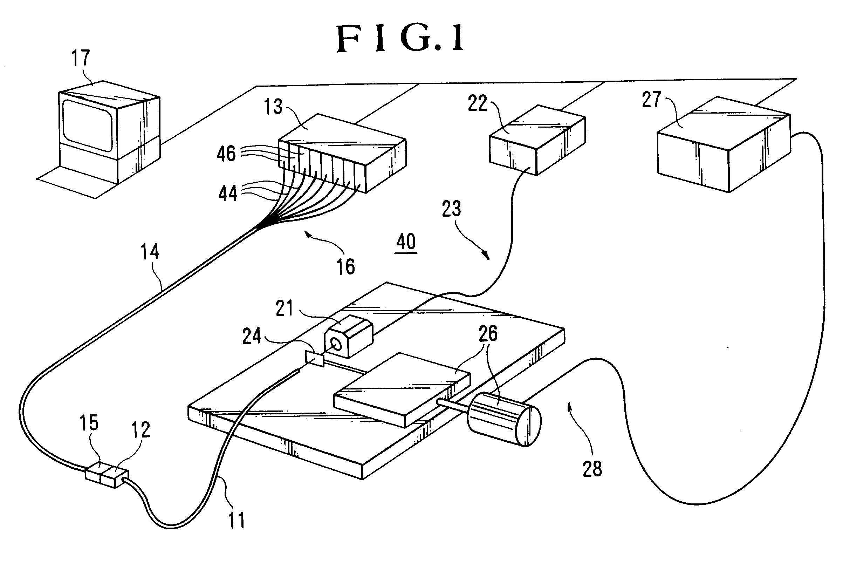

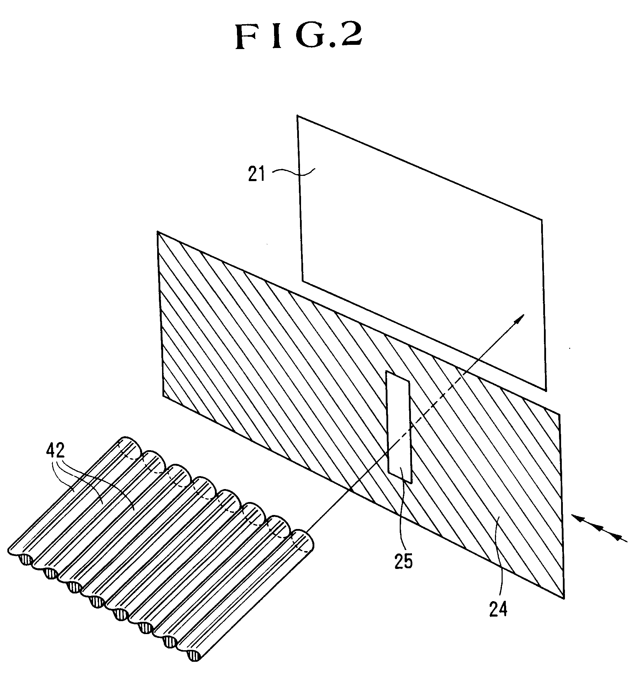

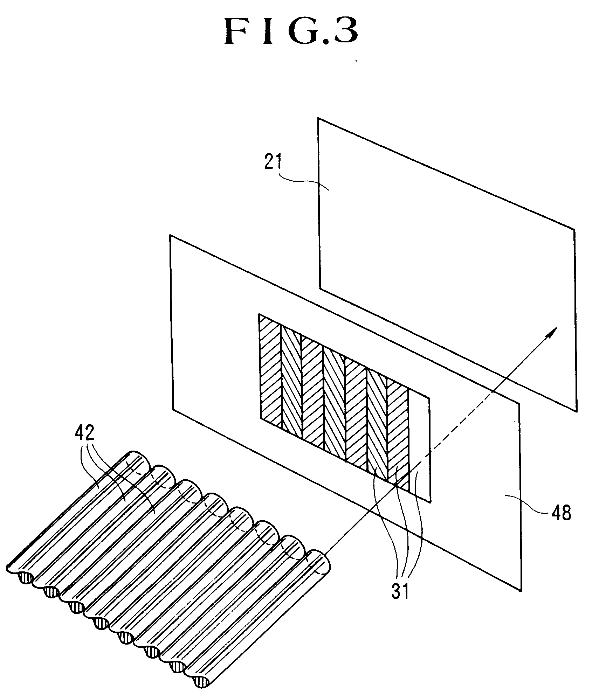

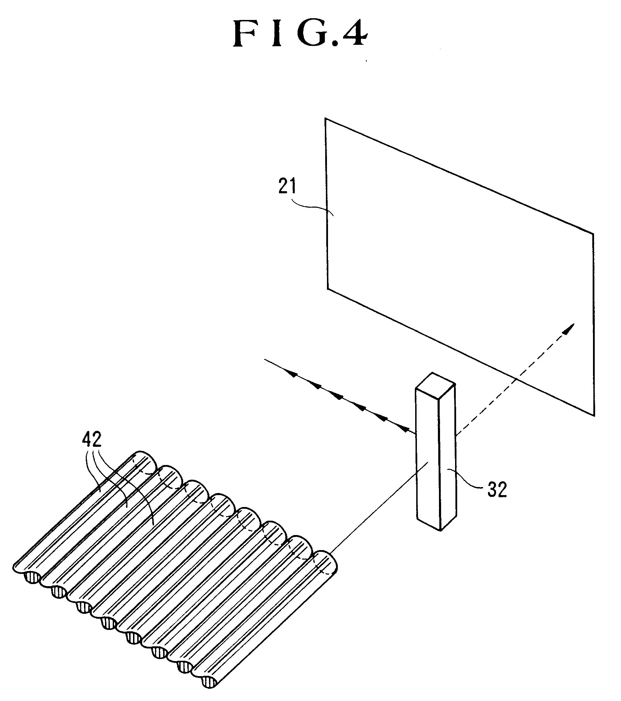

Figure 1 is an overall structural view of an inspection apparatus for an optical fiber cable according to one embodiment of the present invention, Fig. 2 is a perspective view of a light passing/blocking means used for the inspection apparatus, and Fig. 3 and Fig. 4 are perspective views showing other embodiments of the light passing/blocking means used in inspection apparatuses according to other embodiments of the present invention.

### BEST MODE FOR CARRYING OUT THE INVENTION

A detailed explanation will be given below of the present invention based on embodiments shown in the drawings.

As shown in Fig. 1, the inspection apparatus 40 of the present embodiment is comprised so as to inspect a ribbon fiber cable 11 as the object of inspection. The inspection apparatus 40 has a light inputting means 16, a light passing/blocking means 28, and a light receiving means 23. The ribbon fiber cable 11 which is inspected has a plurality of optical fibers 42 (see Fig. 2) arranged inside it. At one end of the ribbon fiber cable 11, there is attached in advance an optical connector 12. At the other end, as shown in Fig. 2, the ends of the optical fibers 42 incorporated therein are exposed in a linear array. In this embodiment, the end of the optical fiber cable where the optical connector 12 is mounted becomes the light inputting side end, while the side where the optical fibers 42 are exposed becomes the light emitting side end.

To input a light beam in the optical fibers 42 of the optical fiber cable 11, a connector 15 of an optical fiber cable 14 for input of inspection light beam, whose optical loss and fiber arrangement have been confirmed in advanced, is connected to the optical connector 12. The optical fiber cable 14 having the optical connector 15 is connected to a light emitter 13 and serves as the light inputting means 16 for the optical fiber cable 11 being inspected.

The number of the optical fibers incorporated in the optical fiber cable 14 is the same as the number of cores of the optical fiber cable 11 being inspected. The numbers of optical paths connected by the optical connectors 2 and 15 attached to the two cables also match. At the end of the optical fiber cable 14 which is opposite end to the connector 15, the optical fibers 44 incorporated therein are exposed. The ends of the optical fibers 44 are connected to light emitting output units 46 of the light emitter 13. The light emitting output units 46 have light emitting diodes attached to them. The light emitting diodes emit light beams in a predetermined order, whereby each light beam is output to the optical fibers 44 in a predetermined order. As an example of emission by the light emitting diodes in a predetermined order, the case may be considered of making the light emitting diodes emit each light beam in order from the left starting with the left most light emitting diode. The order of emission of the light beam emitting diodes is controlled by a control means 17.

The light emitting side end of the ribbon fiber cable 11 being inspected is disposed so as to face the light receiving sensor 21 at a predetermined position away from the same. Light beam emitted from any of the optical fibers 42 in the ribbon fiber cable 11 enters the light receiving sensor 21, where the luminous quantity of the light is measured by the light power meter 22. The light receiving sensor 21 and the light power sensor 22 constitute the light receiving means 23 in the present embodiment. The light receiving sensor 21 is a sensor which can receive all of the light beam emitted from the emitting side ends of the optical fibers 42. It may be constituted by a single light receiving sensor or may be constituted by a number of light receiving sensors.

Between the light receiving sensor 21 and the light emitting side ends of the optical fiber cable 11 is disposed a selective passage member 24 such as shown in Fig. 2. The selective passage member 24 is constituted in this embodiment by a slitted disk in which a slit-shaped passage hole 25 allowing passage of only light beam emitted from one of the optical fibers 42 is formed. The selective passage member 24 is designed to be moved one pitch of the fibers at a time in the direction of arrangement of the optical fibers 42 by a pitch feed mechanism 26 shown in Fig. 1.

The pitch feed mechanism 26 is constituted, for example, by a pulse motor and a mechanism for converting the rotation of the same to linear motion and operates on the basis of control pulses from the feed controller 27. The selective passage member 24, the pitch feed mechanism 26, and the feed controller 27 constitutes a light passing/blocking means 28.

The light inputting means 16 and the light passing/blocking means 28 operate synchronously by a controller 17. That is, when a light beam is inputted in order by the light inputting means 16 from one side of the optical fibers 42 in the ribbon fiber cable 11, the slit-shaped passage hole 25 moves one pitch at a time by the light passing/blocking means 28 in the same order. Therefore, if a light beam is inputted to the light receiving sensor 21 each time when the passage hole 25 is moved one pitch, it is possible to confirm that the optical fibers are connected to the optical connector 12 in the normal arrangement. Further, if the luminous quantity of the light inputted to the light receiving sensor 21 at that time is measured, it is possible to simultaneously measure the connection loss of light due to the connection of the optical connector 12 to the optical fiber cable 11.

Assuming that the order of arrangement of the optical fibers changed in the optical connector 12, the position of the passage hole 25 and the positions of the optical fibers 42 emitting a light beam deviate and the emitted light beam is blocked by the selective passage member 24 so the light beam is not inputted to the light receiving sensor 21. This enables detection of defective arrangement of the optical fibers. In the above-mentioned embodiment, use was made of a slit-shaped passage hole as the light passage hole 25 of the light passing/blocking means, but the shape of the passage hole 25 is not limited to the same and the hole may be a pinhole-shaped hole as well. If use is made of a pinhole-shaped passage hole, it is possible to apply the present invention to the inspection of ribbon fiber cables other than ribbon fiber cables where the optical fibers are arranged in a straight line.

Further, the light passing/blocking means need only selectively pass and block a light beam, so as shown in Fig. 3, use may also be made of a selective passage member 48 which has an array of a liquid crystal films 31, which become transparent or opaque upon with application of voltage, at a pitch corresponding to the optical fibers 42 of the ribbon fiber cable 11. When use is made of this selective passage member 48, by controlling the voltage applied to the liquid crystal films 31, for example, by applying voltage successively from the liquid crystal film 31 of the end, it is possible to successively make only the liquid crystal film 31 to which voltage is applied transparent and to synchronize with the light beam successively emitted from the optical fibers 42. However, in the case of this embodiment, it is necessary to measure in advance the light loss in the case when the liquid crystal film 31 is transparent and to correct the luminous quantity of the light beam detected by the light receiving sensor 21 based on this measured value.

Further, the selective blocking member 32 shown in Fig. 4 is illustrated as another embodiment of the light passing/blocking means. The selective blocking member 32 is constituted so as to block only the light beam emitting from the emitting side end of one of the optical fibers 42 to the light receiving sensor 21. Further, the blocking member 32 is controlled so as to successively move one pitch of the optical fibers at a time in the lateral direction in synchronization with the light beam successively emitted from the optical fibers 42. In the case of this embodiment, if the blocking member 32 is moved one pitch in the lateral direction from the state shown in Fig. 4, for example, the light receiving sensor 21 changes from a state of not receiving light to a state of receiving light. If such a change is considered to be the change in the case of a normal optical fiber arrangement, it is possible to judge that the arrangement is defective when the light receiving sensor 21 receives a light beam before the blocking member 32 is moved. In the case of this embodiment, when inspecting the connection loss of light, it is sufficient to move the blocking member 32 one pitch in the lateral direction and then measure the luminous quantity of the light beam inputted to the light receiving sensor 21.

Note that the present invention is not limited to the above-mentioned embodiments and may be modified in various ways within the range of the present invention.

For example, a method of inspection and an inspection apparatus constituted so that it is possible to input in advance light beams to the inputting side ends of all of the optical fibers 42 in a ribbon fiber cable, modulate in a predetermined order the light beam inputted to each of the optical fibers 42, and pass in a predetermined order the light beam modulated and emitted in a predetermined order for each of the optical fibers 42 using the above-mentioned selective passage members 24 and 48, also fall in the scope of the present invention. In this embodiment, use is made of the light receiving means 22 to detect the presence of modulation of the light beam and the luminous quantity of the light beam. According to this embodiment too, it is possible to simultaneously inspect the order of arrangement of the optical fibers and to inspect the connection loss due to the connector.

Further, as a modification of this embodiment, consideration may be given to the method of successively inputting in a predetermined order only modulated light to optical fibers being inspected, rather than inputting in advance light beams to all of the optical fibers 42.

### (LIST OF REFERENCE NUMERALS)

- 11: optical fiber cable
- 12: optical connector
- 16: light inputting means
- 23: light receiving means
- 24: selective passage member
- 25: passage hole
- 26: pitch feeding mechanism
- 28: light passing/blocking means
- 31: liquid crystal film
- 32: selective blocking member
- 40: inspection apparatus
- 42: optical fiber
- 48: selective passage member

## Claims

1. A method for inspecting a ribbon fiber cable having an optical connector (12) attached to at least one end,
comprising the steps of:
connecting to one end of an optical fiber cable (11) a light inputting means (16) for inputting beams of light in a predetermined order to each of the inputting side ends of the optical fibers (42),
disposing at the other end of the optical fiber cable (11) a light receiving means (23) in a predetermined distance away from the emitting side end of the optical fibers,
disposing between the emitting side ends of the optical fibers (42) and the light receiving means (23) a light passing/blocking means (28) for selectively allowing, for each light beam emitted from the emitting side ends, the passing or blocking of light emitted from the emitting side ends and inputted to the light receiving means (23), and
passing or blocking a light beam inputted and emitted for each optical fiber in a predetermined order by the above-mentioned light passing/blocking means (28) in a predetermined order and using the light receiving means (23) to detect the presence of irradiation of light and the luminous quantity of the light so as to simultaneously perform inspection of the order of arrangement of the optical fibers (42) and the inspection of the connection loss of the connector (12).

2. A method for inspecting a ribbon fiber cable having an optical connector (12) attached to at least one end,
comprising the steps of
connecting to one end of an optical fiber cable a light inputting means (16) for modulating in a predetermined order a light beam for each of the inputting side ends of the optical fibers (42),
disposing at the other end of the optical fiber cable (11) a light receiving means (23) in a predetermined distance away from the emitting side ends of the optical fibers (42),
disposing between the emitting side ends of the optical fibers (42) and the light receiving means (23) a light passing/blocking means (28) for selectively allowing, for each light beam emitted from the emitting side ends, the passing or blocking of a light beam emitted from the emitting side ends and inputted to the light receiving means (23), and
passing a light beam modulated and emitted for each optical fiber in a predetermined order by the above-mentioned light passing/blocking means (28) in a predetermined order and using the light receiving means (23) to detect the presence of irradiation of a light beam and the luminous quantity of the light beam so as to simultaneously perform inspection of the order of arrangement of the optical fibers (42) and the inspection of the connection loss of the connector (12).

3. A method for inspection of an optical fiber cable as set forth in claim 1 or claim 2, where in said light receiving means (23) has a light receiving sensor (21) which can receive all the light beams emitted from the emitting side ends.

4. A method for inspection of an optical fiber cable as set forth in any one of claims 1 to 3, wherein said light passing/blocking means has a selective passage member (24) which has formed a passage hole (25) for allowing the passage of only light emitting from the emitting side end of one of the optical fibers (42) to the light receiving means (23) and a pitch feed mechanism (26) which moves the selective passage member (24) by a predetermined pitch so as to change the light beam which can pass through the passage hole (25).

5. A method for inspection of an optical fiber cable as set forth in any one of claims 1 to 3, wherein said light passing/blocking means has a selective passage member (48) which has liquid crystal films (31), which become transparent or opaque by application of voltage, arranged at a pitch corresponding to the emitting side ends of the optical fibers (42).

6. A method for inspection of an optical fiber cable as set forth in claim 1 or 3, where in said light passing/blocking means has a selective blocking member (32) which blocks only the light emitting from the emitting side end of one of the optical fibers (42) to the light receiving means (23) and a pitch feed mechanism (26) which moves the selective blocking member (32) by a predetermined pitch so as to change the light beam which is blocked by the selective blocking member (32).

7. A method for inspection of an optical fiber cable as set forth in any one of claims 1 to 6, characterized in that a connector of an optical fiber cable (14) for input of inspection light beams, whose connection loss is already known, is connected to one end of the optical fiber cable having an optical connector attached and in that a light beam is inputted through the optical fiber cable (14) for input of inspection light beams to each of the optical fibers of the optical fiber cable to be inspected.

8. An apparatus for inspecting a ribbon fiber cable having an optical connector (12) attached to at least one end,
said apparatus comprising:
a light inputting means (16) which is connected to one end of an optical fiber cable (11) and which is arranged to input beams of light in a predetermined order to each of the inputting side ends of the optical fibers (42),
a light receiving means (23) disposed at the other end of the optical fiber cable (11) in a predetermined distance away from the emitting side ends of the optical fibers (42), and
a light passing/blocking means (28) which is disposed between the emitting side ends of the optical fibers (42) and the light receiving means (23) and which selectively allows, for each light beam emitted from the emitting side ends, the passing or blocking of light emitted from the emitting side ends and inputted to the light receiving means (23), and control means (17, 27, 26) arranged such that,
in use, the light beam inputted and emitted for each optical fiber in a predetermined order is passed or blocked by the above-mentioned light passing/blocking means (28) in a predetermined order and the light receiving means (23) detects the presence of irradiation of the light beam and the luminous quantity of the light beam so as to simultaneously perform inspection of the order of arrangement of the optical fibers (42) and the inspection of the connection loss of the connector (12).

9. An apparatus for inspecting a ribbon fiber cable having an optical connector (12) attached to at least one end,
said apparatus comprising:
a light inputting means (16) which is connected to one end of an optical fiber cable (11) and which is arranged to modulate inputted beams of light in a predetermined order to each of the inputting side ends of the optical fibers (42),
a light receiving means (23) disposed at the other end of the optical fiber cable (11) in a predetermined distance away from the emitting side ends of the optical fibers (42), and
a light passing/blocking means (28) which is disposed between the emitting side ends of the optical fibers (42) and the light receiving means (23) and which selectively allows, for each light beam emitted from the emitting side ends, the passing or blocking of the light beam emitted from the emitting side ends and inputted to the light receiving means (23), and control means (17, 27, 26) arranged such that, in use,
the light beam modulated and emitted for each optical fiber in a predetermined order is passed or blocked by the above-mentioned light passing/blocking means (28) in a predetermined order and the light receiving means (23) detects the presence of irradiation of the light beam and the luminous quantity of the light so as to simultaneously perform inspection of the order of arrangement of the optical fibers (42) and the inspection of the connection loss of the connector (12).

10. An inspection apparatus of a ribbon optical fiber cable as set forth in claim 8 or claim 9, wherein said light receiving means has a light receiving sensor (21) which can receive all the light beam emitted from the said emitting side ends.

11. An inspection apparatus of a ribbon optical fiber cable as set forth in any one of claims 8 to 10, wherein said light passing/blocking means has a selective passage member (24) which has formed a passage hole (25) for allowing the passage of only one light beam emitted from the emitting side end of one of the optical fibers (42) to the light receiving means (23) and a pitch feed mechanism (26) which moves the selective passage member (24) by a predetermined pitch so as to change the light beam which can pass through the passage hole (25).

12. An inspection apparatus of a ribbon optical fiber cable as set forth in any one of claims 8 to 10, wherein said light passing/blocking means has a selective passage member (48) which has liquid crystal films (31), which become transparent or opaque by application of voltage, arranged at a pitch corresponding to the emitting side ends of the optical fibers (42).

13. An inspection apparatus of a ribbon optical fiber cable as set forth in claim 8 or 10, wherein said light passing/blocking means has a selective blocking member (32) which blocks only the light emitting from the emitting side end of one of the optical fibers (42) to the light receiving means (23) and a pitch feed mechanism (26) which moves the selective blocking member (32) by a predetermined pitch so as to change the light beam which is blocked by the selective blocking member (32).

14. An inspection apparatus of a ribbon optical fiber cable as set forth in any one of claims 8 to 13, characterized in that said light inputting means (16) has an optical fiber cable (14) for input of inspection light beams, which is connected to one end of the optical fiber cable (11) at the side where the optical connector is attached and whose connection loss is already known, and inputs a light beam through the optical fiber cable (14) for input of inspection light beams to each of the optical fibers (42) of the optical fiber cable (11) to be inspected.

## Patentansprüche

1. Verfahren zur Untersuchung eines Glasfaser-Bandkabels mit einem optischen Verbinder (12), der an mindestens einem Ende befestigt ist, welches die Schritte aufweist:
Verbinden einer Lichteinspeiseeinrichtung (16) mit einem Ende eines Glasfaserkabels (11) zum Einspeisen von Lichtstrahlen in einer vorgegebenen Reihenfolge in jedes der einspeiseseitigen Enden der Glasfasern (42),
Einrichten einer Lichtempfangseinrichtung (23) an dem anderen Ende des Glasfaserkabels (11) in einem vorgegebenen Abstand von dem ausstrahlungsseitigen Ende der Glasfasern entfernt;
Einrichten einer Lichtdurchlaß-/ -sperreinrichtung (28) zwischen den ausstrahlungsseitigen Enden der Glasfasern (42) und den Lichtempfangseinrichtungen (23), um ausgewählt für jeden von den ausstrahlungsseitigen Enden ausgestrahlten Lichtstrahl das Durchlassen oder Sperren des von den ausstrahlungsseitigen Enden ausgesendeten und der Lichtempfangseinrichtung (23) eingespeisten Lichts zu ermöglichen,
Durchlassen oder Sperren eines Lichtstrahls, der für jede Glasfaser in einer vorgegebenen Reihenfolge über die obengenannte Lichtdurchlaß-/ -sperreinrichtung (28) in einer vorgegebenen Reihenfolge eingespeist und ausgestrahlt worden ist, und Verwenden der Lichtempfangsmittel (23), um das Vorhandensein einer Bestrahlung mit Licht und die Lichtmenge des Lichts festzustellen, um gleichzeitig eine Untersuchung der Reihenfolge der Zusammenstellung der Glasfasern (42) und die Untersuchung des Verbindungsverlustes des Verbinders (12) durchzuführen.

2. Verfahren zur Untersuchung eines Glasfaser-Bandkabels mit einem optischen Verbinder (12), der an mindestens einem Ende befestigt ist, welches die Schritte aufweist:
Verbinden einer Lichteinspeiseeinrichtung (16) mit einem Ende eines Glasfaserkabels (11) zur Modulation eines Lichtstrahls in einer vorgegebenen Reihenfolge für jedes der einspeiseseitigen Enden der Glasfasern (42),
Einrichten einer Lichtempfangseinrichtung (23) an dem anderen Ende des Glasfaserkabels (11) in einem vorgegebenen Abstand von dem ausstrahlungsseitigen Ende der Glasfasern entfernt;
Einrichten einer Lichtdurchlaß-/ -sperreinrichtung (28) zwischen den ausstrahlungsseitigen Enden der Glasfasern (42) und den Lichtempfangseinrichtungen (23), um ausgewählt für jeden von den ausstrahlungsseitigen Enden ausgestrahlten Lichtstrahl das Durchlassen oder Sperren des von den ausstrahlungsseitigen Enden ausgesendeten und der Lichtempfangseinrichtung (23) eingespeisten Lichts zu ermöglichen,
Durchlassen eines modulierten und ausgestrahlten Lichtstrahls für jede Glasfaser in einer vorgegebenen Reihenfolge über die obengenannte Lichtdurchlaß-/ -sperreinrichtung (28) in einer vorgegebenen Reihenfolge, und Verwenden der Lichtempfangsmittel (23), um das Vorhandensein einer Bestrahlung mit Licht und die Lichtmenge des Lichts festzustellen, um gleichzeitig eine Untersuchung der Reihenfolge der Zusammenstellung der Glasfasern (42) und die Untersuchung des Verbindungsverlustes des Verbinders (12) zu untersuchen.

3. Verfahren zur Untersuchung eines Glasfaserkabels nach Anspruch 1 oder 2, bei welchem die Lichtempfangseinrichtung (23) einen Lichtempfangssensor (21) besitzt, welcher die gesamten von den ausstrahlungsseitigen Enden ausgestrahlten Lichtstrahlen empfangen kann.

4. Verfahren zur Untersuchung eines Glasfaserkabels nach einem der Ansprüche 1 bis 3, bei welchem die Lichtdurchlaß-/ -sperreinrichtung ein Auswahldurchlaßglied (24), in welchem ein Durchlaßloch (25) zur Ermöglichung des Durchgangs nur des von dem ausstrahlungsseitigen Ende von einer der Glasfasern (42) ausgestrahlten Lichts zu der Lichtempfangseinrichtung (23) ausgebildet ist und einen Lochabstandsvorschubmechanismus (26) besitzt, welcher das Auswahldurchlaßglied (24) um einen vorgegebenen Lochabstand bewegt, um den Lichtstrahl, welcher durch das Durchlaßloch (25) hindurchtreten kann, zu wechseln.

5. Verfahren zur Untersuchung eines Glasfaserkabels nach einem der Ansprüche 1 bis 3, bei welchem die Lichtdurchlaß-/ -sperreinrichtung ein Auswahldurchlaßglied (48) besitzt, welches in einem Lochabstand entsprechend den ausstrahlungsseitigen Enden der Glasfasern (42) angeordnete Flüssigkristallfilme (31) besitzt, welche durch Anlegen einer Spannung lichtdurchlässig oder lichtundurchlässig werden.

6. Verfahren zur Untersuchung eines Glasfaserkabels nach einem der Ansprüche 1 oder 3, bei welchem die Lichtdurchlaß-/ -sperreinrichtung ein Auswahlsperrglied (32), welches nur das von dem ausstrahlungsseitigen Ende eines der Glasfasern (42) zu der Lichtempfangseinrichtung (23) ausgestrahlte Licht sperrt, und einen Lochabstandsvorschubmechanismus (26) besitzt, welcher das Auswahlsperrglied (32) um einen vorgegebenen Lochabstand bewegt, um den Lichtstrahl, welcher durch das Auswahlsperrglied (32) gesperrt wird, zu wechseln.

7. Verfahren zur Untersuchung eines Glasfaserkabels nach einem der Ansprüche 1 bis 6, dadurch gekennzeichnet, daß ein Verbinder eines Glasfaserkabels (14) zur Einspeisung von Untersuchungslichtstrahlen, deren Verbindungsverlust bereits bekannt ist, mit einem Ende des Glasfaserkabels, welches einen daran befestigten optischen Verbinder aufweist und in welches ein Lichtstrahl durch das Glasfaserkabel (14) zur Einspeisung von Untersuchungslichtstrahlen in jede der Glasfasern des zu untersuchenden Glasfaserkabels eingespeist wird, verbunden ist.

8. Vorrichtung zur Untersuchung eines Glasfaser-Bandkabels mit einem optischen Verbinder (12), der an mindestens einem Ende befestigt ist, wobei die Vorrichtung umfaßt:
eine Lichteinspeiseeinrichtung (16), welche mit einen Ende eines Glasfaserkabels (11) verbunden ist, und welche eingerichtet ist, um in jedes der einspeiseseitigen Enden der Glasfasern (42) Lichtstrahlen in einer vorgegebenen Reihenfolge einzuspeisen,
eine an dem anderen Ende des Glasfaserkabels (11) in einem vorgegebenen Abstand von den ausstrahlungsseitigen Enden der Glasfasern (42) entfernt angeordnete Lichtempfangseinrichtung (23), und
eine Lichtdurchlaß-/ -sperreinrichtung (28), welche zwischen den ausstrahlungsseitigen Enden der Glasfasern (42) und der Lichtempfangseinrichtung (23) angeordnet ist, und welche ausgewählt für jeden von den ausstrahlungsseitigen Enden ausgestrahlten Lichtstrahl das Durchlassen oder Sperren des von den ausstrahlungsseitigen Enden ausgestrahlten und der Lichtempfangseinrichtung (23) eingespeisten Lichts ermöglicht, und Steuermittel (17, 27, 26), die derart angeordnet sind, daß während der Benutzung der für jede Glasfaser in einer vorgegebenen Reihenfolge eingespeiste und ausgestrahlte Lichtstrahl durch die obengenannte Lichtdurchlaß-/ -sperreinrichtung (28) in einer vorgegebenen Reihenfolge durchgelassen oder gesperrt wird, und die Lichtempfangsmittel (23) das Vorhandensein einer Abstrahlung des Lichtstrahls und die Lichtmenge des Lichtstrahls feststellt, um gleichzeitig eine Untersuchung der Reihenfolge der Zusammenstellung der Glasfasern (42) und die Untersuchung des Verbindungsverlustes des Verbinders (12) durchzuführen.

9. Vorrichtung zur Untersuchung eines Glasfaser-Bandkabels mit einem optischen Verbinder (12), der an mindestens einem Ende befestigt ist, wobei die Vorrichtung umfaßt:
eine Lichteinspeiseeinrichtung (16), welche mit einem Ende eines Glasfaserkabels (11) verbunden ist, und welche eingerichtet ist, um an jedem der einspeiseseitigen Enden der Glasfasern (42) eingespeiste Lichtstrahlen in einer vorgegebenen Reihenfolge zu modulieren,
eine an dem anderen Ende des Glasfaserkabels (11) in einem vorgegebenen Abstand von den ausstrahlungsseitigen Enden der Glasfasern (42) entfernt angeordnete Lichtempfangseinrichtung (23), und
eine Lichtdurchlaß-/ -sperreinrichtung (28), welche zwischen den ausstrahlungsseitigen Enden der Glasfasern (42) und der Lichtempfangseinrichtung (23) angeordnet ist, und welche ausgewählt für jeden von den ausstrahlungsseitigen Enden ausgestrahlten Lichtstrahl das Durchlassen oder Sperren des von den ausstrahlungsseitigen Enden ausgestrahlten und der Lichtempfangseinrichtung (23) eingespeisten Lichts ermöglicht, und Steuermittel (17, 27, 26), die derart angeordnet sind, daß während der Benutzung der für jede Glasfaser in einer vorgegebenen Reihenfolge eingespeiste und ausgestrahlte Lichtstrahl durch die obengenannte Lichtdurchlaß-/ -sperreinrichtung (28) in einer vorgegebenen Reihenfolge durchgelassen oder gesperrt wird, und die Lichtempfangsmittel (23) das Vorhandensein einer Abstrahlung des Lichtstrahls und die Lichtmenge des Lichtstrahls feststellt, um gleichzeitig eine Untersuchung der Reihenfolge der Zusammenstellung der Glasfasern (42) und die Untersuchung des Verbindungsverlustes des Verbinders (12) durchzuführen.

10. Untersuchungsvorrichtung eines Glasfaser-Bandkabels nach Anspruch 8 oder 9, bei welchem die Lichtempfangseinrichtung (23) einen Lichtempfangssensor (21) besitzt, welcher die gesamten von den ausstrahlungsseitigen Enden ausgestrahlten Lichtstrahlen empfangen kann.

11. Untersuchungsvorrichtung eines Glasfaser-Bandkabels nach einem der Ansprüche 8 bis 10, bei welcher die Lichtdurchlaß-/ -sperreinrichtung ein Auswahldurchlaßglied (24), in welchem ein Durchlaßloch (25) zur Ermöglichung des Durchgangs nur des von dem ausstrahlungsseitigen Ende von einer der Glasfasern (42) ausgestrahlten Lichts zu der Lichtempfangseinrichtung (23) ausgebildet ist, und einen Lochabstandsvorschubmechanismus (26) besitzt, welcher das Auswahldurchlaßglied (24) um einen vorgegebenen Lochabstand bewegt, um den Lichtstrahl, welcher durch das Durchlaßloch (25) hindurchtreten kann, zu wechseln.

12. Untersuchungsvorrichtung eines Glasfaser-Bandkabels nach einem der Ansprüche 8 bis 10, bei welcher die Lichtdurchlaß-/ -sperreinrichtung ein Auswahldurchlaßglied (48) besitzt, welches in einem Lochabstand entsprechend den ausstrahlungsseitigen Enden der Glasfasern (42) angeordnete Flüssigkristallfilme (31) besitzt, welche durch Anlegen einer Spannung lichtdurchlässig oder lichtundurchlässig werden,.

13. Untersuchungsvorrichtung eines Glasfaser-Bandkabels nach Anspruch 8 oder 10, bei welcher die Lichtdurchlaß-/ -sperreinrichtung ein Auswahlsperrglied (32), welches nur das von dem ausstrahlungsseitigen Ende eines der Glasfasern (42) zu der Lichtempfangseinrichtung (23) ausgestrahlte Licht sperrt, und einen Lochabstandsvorschubmechanismus (26) besitzt, welcher das Auswahlsperrglied (32) um einen vorgegebenen Lochabstand bewegt, um den Lichtstrahl, welcher durch das Auswahlsperrglied (32) gesperrt wird, zu wechseln.

14. Untersuchungsvorrichtung eines Glasfaser-Bandkabels nach einem der Ansprüche 8 bis 13, dadurch gekennzeichnet, daß die Lichteinspeiseeinrichtung (16) ein Glasfaserkabel (14) zur Eingabe von Untersuchungslichtstrahlen besitzt, welches mit einem Ende des Glasfaserkabels (11) an der Seite, wo der optische Verbinder befestigt ist, verbunden ist, und dessen Verbindungsverlust bereits bekannt ist, und einen Lichtstrahl durch das Glasfaserkabel (14) zur Einspeisung von Untersuchungslichtstrahlen für jede der Glasfasern (42) des zu untersuchenden Glasfaserkabels (11) einspeist.

## Revendications

1. Procédé d'inspection d'un câble de fibres sous forme d'un ruban, ayant un connecteur optique (12) fixé à une extrémité au moins,
comprenant les étapes suivantes :
la connexion à une première extrémité d'un câble (11) à fibres optiques d'un dispositif (16) d'introduction de lumière destiné à introduire des faisceaux lumineux dans un ordre prédéterminé à chacune des extrémités du côté d'entrée des fibres optiques (42),
la disposition, à l'autre extrémité du câble (11) à fibres optiques, d'un dispositif (23) de réception de lumière à une distance prédéterminée de l'extrémité du côté d'émission des fibres optiques,
la disposition, entre les extrémités du côté d'émission des fibres optiques (42) et le dispositif (23) de réception de lumière, d'un dispositif (28) destiné à transmettre-arrêter la lumière destinée à permettre sélectivement, pour chaque faisceau lumineux émis par les extrémités du côté d'émission, la transmission ou l'arrêt de la lumière émise par les extrémités du côté d'émission et transmise au dispositif (23) de réception de lumière, et
la transmission ou l'arrêt d'un faisceau lumineux introduit et émis pour chaque fibre optique dans un ordre prédéterminé par le dispositif précité (28) de transmission-arrêt de lumière dans un ordre prédéterminé et l'utilisation du dispositif de réception de lumière (23) pour la détection de la présence d'un rayonnement lumineux et de la quantité de lumière afin que l'inspection de l'ordre de disposition des fibres optiques (42) et l'inspection des pertes de connexion du connecteur (12) soient réalisées simultanément.

2. Procédé d'inspection d'un câble de fibres sous forme d'un ruban ayant un connecteur optique (12) fixé à au moins une extrémité,
comprenant les étapes suivantes :
la connexion à une première extrémité d'un câble à fibres optiques d'un dispositif (16) d'introduction de lumière destiné à moduler dans un ordre prédéterminé un faisceau lumineux pour chacune des extrémités du côté d'introduction des fibres optiques (42),
la disposition, à l'autre extrémité du câble (11) à fibres optiques, d'un dispositif (23) de réception de lumière à une distance prédéterminée des extrémités du côté d'émission des fibres optiques (42),
la disposition, entre les extrémités du côté d'émission des fibres optiques (42) et le dispositif de réception de lumière (23), d'un dispositif de transmission-arrêt (28) de lumière destiné à permettre sélectivement, pour chaque faisceau lumineux émis par les extrémités du côté d'émission, la transmission ou l'arrêt du faisceau lumineux émis par les extrémités du côté d'émission et introduit dans le dispositif de réception de lumière (23), et
la transmission d'un faisceau lumineux modulé et émis pour chaque fibre optique dans un ordre prédéterminé par le dispositif précité de transmission-arrêt (28) de lumière dans un ordre prédéterminé, et l'utilisation du dispositif de réception de lumière (23) pour la détection de la présence d'un rayonnement du faisceau lumineux et de la quantité de lumière du faisceau lumineux afin que l'inspection de l'ordre de disposition des fibres optiques (42) et l'inspection des pertes de connexion du connecteur (12) soient réalisées simultanément.

3. Procédé d'inspection d'un câble de fibres optiques selon la revendication 1 ou 2, dans lequel le dispositif de réception de lumière (23) a un capteur (21) de réception de lumière qui peut recevoir tous les faisceaux lumineux émis par les extrémités du côté d'émission.

4. Procédé d'inspection d'un câble de fibres optiques selon l'une quelconque des revendications 1 à 3, dans lequel le dispositif de transmission-arrêt de lumière a un organe (24) de transmission sélective qui a un trou (25) permettant le passage de la seule lumière provenant de l'extremité du côté d'émission de l'une des fibres optiques (42) vers le dispositif de réception de lumière (23), et un mécanisme (26) d'avance par pas qui déplace l'organe de transmission sélective (24) d'un pas prédéterminé afin qu'il change le faisceau lumineux qui peut passer dans le trou de transmission (25).

5. Procédé d'inspection d'un câble de fibres optiques selon l'une quelconque des revendications 1 à 3, dans lequel le dispositif de transmission-arrêt de lumière possède un organe de transmission sélective (48) ayant des films (31) à cristaux liquides qui deviennent transparents ou opaques par application d'une tension, disposés avec un pas correspondant aux extrémités des côtés d'émission des fibres optiques (42).

6. Procédé d'inspection d'un câble de fibres optiques selon la revendication 1 ou 3, dans lequel le dispositif de transmission-arrêt de lumière a un organe (32) d'arrêt sélectif qui n'arrête que la lumière provenant de l'extrémité du côté d'émission de l'une des fibres optiques (42) vers le dispositif de réception de lumière (23), et un mécanisme (26) d'avance par pas qui déplace l'organe d'arrêt sélectif (32) d'un pas prédéterminé afin qu'il change le faisceau lumineux qui est arrêté par le dispositif d'arrêt sélectif (32).

7. Procédé d'inspection d'un câble de fibres optiques selon l'une quelconque des revendications 1 à 6, caractérisé en ce qu'un connecteur d'un câble (14) à fibres optiques destiné à l'introduction de faisceaux lumineux d'inspection, dont les pertes de connexion sont déjà connues, est connecté à une première extrémité du câble à fibres optiques ayant un connecteur optique fixé et en ce que le faisceau lumineux est introduit par le câble à fibres optiques (14) afin que les faisceaux lumineux d'inspection soient introduits dans chacune des fibres optiques du câble à fibres optiques à inspecter.

8. Appareil d'inspection d'un câble à fibres sous forme d'un ruban, ayant un connecteur optique (12) fixé à au moins une première extrémité,
l'appareil comprenant :
un dispositif (16) d'introduction de lumière qui est connecté à une première extrémité d'un câble (11) à fibres optiques et qui est disposé afin qu'il introduise les faisceaux de lumière dans un ordre prédéterminé à chacune des extrémités du côté d'introduction des fibres optiques (42),
un dispositif de réception de lumière (23) placé à l'autre extrémité du câble à fibres optiques (11) à une distance prédéterminée des extrémités du côté d'émission des fibres optiques (42), et
un dispositif (28) de transmission-arrêt de lumière placé entre les extrémités du côté d'émission des fibres optiques (42) et le dispositif de réception de lumière (23) et qui permet sélectivement, pour chaque faisceau lumineux émis par les extrémités du côté d'émission, la transmission ou l'arrêt de la lumière émise par les extrémités du côté d'émission et transmise au dispositif de réception de lumière (23), et un dispositif de commande (17, 27, 26) disposé de manière que, pendant l'utilisation, le faisceau lumineux introduit et émis par chaque fibre optique dans un ordre prédéterminé soit transmis ou arrêté par le dispositif précité de transmission-arrêt de lumière (28) dans un ordre prédéterminé, et le dispositif de réception de lumière (23) détecte la présence d'un rayonnement du faisceau lumineux et la quantité de lumière du faisceau lumineux afin qu'il exécute simultanément l'inspection de l'ordre de la disposition des fibres optiques (42) et l'inspection des pertes de connexion du connecteur (12).

9. Appareil d'inspection d'un câble à fibres en forme de ruban ayant un connecteur optique (12) fixé à une extrémité au moins,
l'appareil comprenant :
un dispositif (16) d'introduction de lumière qui est connecté à une première extrémité d'un câble (11) à fibres optiques et qui est destiné à moduler des faisceaux introduits de lumière dans un ordre prédéterminé à chacune des extrémités du côté d'introduction des fibres optiques (42),
un dispositif de réception de lumière (23) disposé à l'autre extrémité du câble (11) à fibres optiques à une distance prédéterminée des extrémités du côté d'émission des fibres optiques (42), et
un dispositif (28) de transmission-arrêt de lumière placé entre les extrémités du côté d'émission des fibres optiques (42) et le dispositif de réception de lumière (23) et qui permet sélectivement, pour chaque faisceau lumineux émis par les extrémités du côté d'émission, la transmission ou l'arrêt du faisceau lumineux émis par les extrémités du côté d'émission et introduit dans le dispositif de réception de lumière (23), et un dispositif de commande (17, 27, 26) disposé afin que, pendant l'utilisation, le faisceau lumineux modulé et émis par chaque fibre optique dans un ordre prédéterminé soit transmis ou arrêté par le dispositif précité (28) de transmission-arrêt de lumière dans un ordre prédéterminé, et le dispositif de réception de lumière (23) détecte la présence du rayonnement du faisceau lumineux et la quantité de lumière de manière qu'il exécute simultanément l'inspection de l'ordre de la disposition des fibres optiques (42), et l'inspection des pertes de connexion du connecteur (12).

10. Appareil d'inspection d'un câble de fibres optiques sous forme d'un ruban selon la revendication 8 ou 9, dans lequel le dispositif de réception de lumière a un capteur (21) de réception de lumière qui peut recevoir tout le faisceau lumineux émis par les extrémités du côté d'émission.

11. Appareil d'inspection d'un câble de fibres optiques sous forme d'un ruban selon l'une quelconque des revendications 8 à 10, dans lequel le dispositif de transmission-arrêt de lumière a un organe (24) de transmission sélective qui comporte un trou de transmission (25) destiné à permettre le passage uniquement d'un faisceau lumineux émis par l'extrémité du côté d'émission de l'une des fibres optiques (42) vers le dispositif de réception de lumière (23), et un mécanisme (26) d'avance par pas qui déplace l'organe (24) de transmission sélective d'un pas prédéterminé afin qu'il change le faisceau lumineux qui peut passer dans le trou de transmission (25).

12. Appareil d'inspection d'un câble de fibres optiques sous forme d'un ruban selon l'une quelconque des revendications 8 à 10, dans lequel le dispositif de transmission-arrêt de lumière a un organe (48) de transmission sélective ayant des films (31) à cristaux liquides qui deviennent transparents ou opaques par application d'une tension, disposés avec un pas correspondant aux extrémités du côté d'émission des fibres optiques (42).

13. Appareil d'inspection d'un câble de fibres optiques sous forme d'un ruban selon la revendication 8 ou 10, dans lequel le dispositif de transmission-arrêt de lumière a un organe d'arrêt sélectif (32) qui arrête uniquement la lumière provenant de l'extrémité du côté d'émission de l'une des fibres optiques (42) vers le dispositif de réception de lumière (23) et un mécanisme (26) d'avance par pas qui déplace l'organe (32) d'arrêt sélectif d'un pas prédéterminé afin qu'il change le faisceau lumineux qui est arrêté par l'organe d'arrêt sélectif (32).

14. Appareil d'inspection d'un câble de fibres optiques sous forme d'un ruban selon l'une quelconque des revendications 8 à 13, caractérisé en ce que le dispositif d'introduction de lumière (16) a un câble à fibres optiques (14) destiné à l'introduction de faisceaux lumineux d'inspection, qui est connecté à une première extrémité du câble à fibres optiques (11) du côté auquel le connecteur optique est fixé et dont les pertes de connexion sont déjà connues, et il transmet un faisceau lumineux par le câble à fibres optiques (14) pour l'introduction de faisceaux lumineux d'inspection dans chacune des fibres optiques (42) du câble (11) à fibres optiques qui doit être inspecté.
